# EUROPÄISCHE PATENTSCHRIFT

(11) **EP 4 134 579 B1**
(45) Veröffentlichungstag und Bekanntmachung des Hinweises auf die Patenterteilung: **10.07.2024**
(21) Anmeldenummer: 22020371.5
(22) Anmeldetag: 03.08.2022
(51) Int. Cl.: F16L 25/14, F16L 27/10, H02G 3/06, H02G 3/04, H02G 3/22

(54) **ROHRVERBINDUNGSSYSTEM, VERWENDUNG UND VERFAHREN**
PIPE CONNECTION SYSTEM, USE AND METHOD
SYSTÈME DE RACCORDEMENT DE TUYAUX, UTILISATION ET PROCÉDURE

(30) Priorität: 10.08.2021 DE 102021120824
(43) Veröffentlichungstag der Anmeldung: 15.02.2023
(73) Patentinhaber: Enerpipe GmbH, 91161 Hilpoltstein (DE)
(72) Erfinder: Heinloth, Ludwig, DE-91161 Hilpoltstein (DE)
(74) Vertreter: Schneider, Andreas

(56) Entgegenhaltungen:
- DE-U1- 202016 101 248
- FR-A1- 3 021 385
- GB-A- 1 220 515
- US-A- 4 109 097
- US-A- 5 193 859
- US-A1- 2021 108 744

## Beschreibung

Die Erfindung betrifft ein Rohrverbindungssystem mit einer Kabeldurchführung die Verwendung eines Kabeldurchführungselements, sowie ein Verfahren zum Abdichten einer Rohrverbindung.

Bei der Anbindung eines Gehäuses an ein Nah- oder Fernwärmenetz wird ein Mediumrohr im Bereich der Bodenplatte in ein Leerrohr geführt. Bei einem Mediumrohr handelt es sich um das Versorgungsrohr einer Fern- oder Nahwärmeleitung, das insbesondere zum Transport warmgehender Medien ausgebildet ist. Beispielsweise ist das Mediumrohr ein flexibles Verbundrohr mit einem Medienrohr aus Kunststoff und einem Mantelrohr aus Polyethylen. Derartige Verbundrohre werden auch mit dem Kürzel PMR (polymeres Mediumrohr) bezeichnet. Da das Mediumrohr typischerweise in einem Sandbett verlegt ist, muß der Übergang zwischen Mediumrohr und Leerrohr zumindest sanddicht abgedichtet werden.

Herkömmliche Verbindungssysteme, welche eine Abdichtung gewährleisten, wie beispielsweise Dichtflansche, sind zumeist konstruktiv aufwendig und teuer. Dies trifft insbesondere für solche Verbindungssysteme zu, die gleichzeitig auch eine abgedichtete Durchführung von Kabeln bereitstellen, die zusammen mit dem Mediumrohr in das Gebäude hineingeführt werden sollen.

GB 1 220 515 A beschriebt eine Vorrichtung zum dichten Verschließen der Öffnung eines Leitungsrohres, die einen sich dem Ende des Leitungsrohres anpassenden Pfropfen aufweist. Dieser Pfropfen wirkt mit Anschlägen zusammen, die sein Eindringen in die Öffnung des Leitungsrohres begrenzen, sowie mit einer seitlichen, elastischen Dichtung, die zum Abdichten des Pfropfens an der Innenseite der Leitungsrohrwand anliegt. Der Pfropfen hat einen Deckel aus einem Werkstoff, der zum Durchstecken eines Rohres kleineren Durchmessers leicht eingeschnitten werden kann. US 2021/108744 A1 offenbart ein weiteres Rohrverbindungssystem.

Eine Aufgabe der vorliegenden Erfindung ist es, eine besonders einfache und preiswerte technische Lösung zum Einführen von Kabeln zusammen mit einem Mediumrohr einer Nah- oder Fernwärmeleitung in ein Leerrohr zu ermöglichen, ohne daß auf eine Abdichtung der Verbindung von Mediumrohr und Leerrohr verzichtet werden muß.

Diese Aufgabe wird durch ein Rohrverbindungssystem nach Anspruch 1 bzw. durch eine Verwendung nach Anspruch 7 bzw. durch ein Verfahren nach Anspruch 8 gelöst.

Das erfindungsgemäße Rohrverbindungssystem umfaßt einen Rohrverbinder zum Verbinden eines Mediumrohres einer Nah- oder Fernwärmeleitung mit einem Leerrohr, in das ein Abschnitt des Mediumrohres eingeführt ist, wobei der Rohrverbinder nach Art einer Manschette einerseits an das Mediumrohr und andererseits an das Leerrohr anlegbar ist. Das Rohrverbindungssystem umfaßt weiter ein wahlweise mit dem Rohrverbinder verwendbares Kabeldurchführungselement, das eine Anzahl Kabeldurchführungsöffnungen aufweist, wobei das Kabeldurchführungselement zwischen dem Rohrverbinder und dem Mediumrohr, die Rohrverbindung abdichtend, vorzugsweise dabei eine Anzahl Kabel aufnehmend, plazierbar ist derart, daß es gleichzeitig an einer Außenwand des Mediumrohres und an einer Innenwand des Rohrverbinders anliegt.

Das zur Verwendung mit einem Rohrverbinder in einem solchen Rohrverbindungssystem ausgebildete Kabeldurchführungselement besteht aus einem komprimierbaren, vorzugsweise elastischen Material. Das Kabeldurchführungselement umfaßt eine erste Anlagefläche, ausgebildet zur Anlage an dem Mediumrohr und eine zweite Anlagefläche, ausgebildet zur Anlage an dem Rohrverbinder. Es umfaßt außerdem eine Anzahl Kabeldurchführungsöffnungen.

Die erfindungsgemäße Verwendung eines Kabeldurchführungselements, welches Kabeldurchführungselement aus einem komprimierbaren, vorzugsweise elastischen Material besteht und eine erste Anlagefläche aufweist, die zur Anlage an einem Mediumrohr ausgebildet ist, und die eine zweite Anlagefläche aufweist, die zur Anlage an einem Rohrverbinder ausgebildet ist, und das eine Anzahl Kabeldurchführungsöffnungenen umfaßt, bezieht sich auf die Verwendung mit einem Rohrverbinder in einem erfindungsgemäßen Rohrverbindungssystem derart, daß das Kabeldurchführungselement, eine Anzahl Kabel aufnehmend, zwischen dem Rohrverbinder und dem Mediumrohr, die Rohrverbindung abdichtend, plazierbar ist derart, daß es gleichzeitig an einer Außenwand des Mediumrohres und an einer Innenwand des Rohrverbinders anliegt.

Das erfindungsgemäße Verfahren zum Abdichten einer Rohrverbindung mit Hilfe eines Rohrverbindungssystems, das einen Rohrverbinder und ein Kabeldurchführungselement umfaßt, weist folgende Schritten auf: Verbinden eines Mediumrohres einer Nah- oder Fernwärmeleitung mit einem Leerrohr, in das ein Abschnitt des Mediumrohres eingeführt ist, wobei der Rohrverbinder nach Art einer Manschette einerseits an das Mediumrohr und andererseits an das Leerrohr angelegt wird; Plazieren des Kabeldurchführungselements, das eine Anzahl Kabeldurchführungsöffnungen aufweist, zwischen dem Rohrverbinder und dem Mediumrohr, die Rohrverbindung abdichtend, derart, daß es gleichzeitig an der Außenwand des Mediumrohres und an der Innenwand des Rohrverbinders anliegt, wobei vor dem Plazieren des Kabeldurchführungselements zwischen dem Rohrverbinder und dem Mediumrohr in wenigstens eine der Kabeldurchführungsöffnungen des Kabeldurchführungselements ein Kabel eingelegt wird.

Die im Folgenden im Zusammenhang mit dem erfindungsgemäßen Rohrverbindungssystem bzw. dem Kabeldurchführungselement erläuterten Vorteile und Ausgestaltungen gelten sinngemäß auch für das erfindungsgemäße Verfahren bzw. die erfindungsgemäße Verwendung und umgekehrt.

Vorteilhafte Ausführungen der Erfindung sind in den Unteransprüchen angegeben.

Mit Hilfe des Rohrverbinders, der vorzugsweise nach Art einer Manschette oder Muffe ausgeführt ist, kann eine dichte Verbindung von Mediumrohr und Leerrohr hergestellt werden. Mit Hilfe des zusätzlich verwendeten, außenseitig an dem Mediumrohr anliegenden Kabeldurchführungselements wird ein Einführen von Kabeln zusammen mit dem Mediumrohr in das Leerrohr ermöglicht, ohne daß auf eine Abdichtung der Verbindung von Mediumrohr und Leerrohr verzichtet werden muß.

Das Kabeldurchführungselement stellt dabei eine dichte Kabeldurchführung entlang eines Teilabschnitts des Rohrumfangs bereit. Im Unterschied zu Dichtungselementen, die das Mediumrohr mantelförmig vollständig umgreifen, wird durch das Einlegen eines lediglich an einem Umfangsabschnitt des Mediumrohres anliegenden Kabeldurchführungselements erreicht, daß - ein Mindestmaß an Flexibilität bzw. Kompressibilität des Mediumrohres vorausgesetzt - ein Standard-Rohrverbinder für die erfindungsgemäße dichte Kabeldurchführung verwendet werden kann, dessen Innendurchmesser auf den Außendurchmesser des Mediumrohres abgestimmt ist, ohne daß ein vergrößerter Außendurchmesser eines mit einem Dichtelement ummantelten Mediumrohres berücksichtigt werden muß.

Ein weiterer Vorteil besteht darin, daß das Rohrverbindungssystem sowohl mit als auch ohne das Kabeldurchführungselement verwendbar ist, je nachdem, ob eine Kabeldurchführung gewünscht ist oder nicht. Eine kombinierte Anwendung von Kabeldurchführungselement und Rohrverbinder ist nicht zwingend erforderlich.

Mit anderen Worten kann das Kabeldurchführungselement, da es als separates Bauteil ausgeführt ist, wahlweise mit dem Rohrverbinder verwendet werden, wenn eine abgedichtete Verlegung von Kabeln zusammen mit dem Mediumrohr erfolgen soll. Es ist jedoch ebenfalls möglich, das Kabeldurchführungselement als integralen Teil des Rohrverbinders auszuführen, insbesondere einteilig oder einstückig mit dem Rohrverbinder, so daß das Kabeldurchführungselement dauerhaft an der Innenwand des Rohrverbinders angeordnet ist (kein Teil der beanspruchten Erfindung).

Gemäß einer vorteilhaften Ausführungsform der Erfindung umfaßt das Rohrverbindungssystem eine Anzahl Klemmvorrichtungen, wobei wenigstens eine erste Klemmvorrichtung zum Aufbringen von vorzugsweise radial gerichteten Preßkräften auf einen ersten Abschnitt des Rohrverbinders ausgebildet ist, zum Verbinden des Rohrverbinders mit dem Mediumrohr, wobei das Kabeldurchführungselement in diesem ersten Abschnitt zwischen dem Rohrverbinder und dem Mediumrohr plazierbar ist, wodurch das Kabeldurchführungselement bei einem Aufbringen der Preßkräfte gleichzeitig gegen die Außenwand des Mediumrohres und die Innenwand des Rohrverbinders gepreßt wird.

Durch ein mechanisches Aufbringen des Preßdruckes mit Hilfe der Klemmvorrichtung wird das Kabeldurchführungselement zwischen Rohrverbinder und Mediumrohr verklemmt. Die auf diese Weise hergestellte Abdichtung bleibt dauerhaft aufrecht erhalten. Da mit Hilfe der Klemmvorrichtung die Preßkräfte vorzugsweise radial gerichtet sind, erfolgt, bezogen auf die Oberfläche des Mediumrohres, ein gleichmäßiges Anpressen, ohne daß eine unerwünschte Deformation des Mediumrohres auftritt oder die Eigenschaften des Mediumrohres nachteilig verändert werden. Vorzugsweise wird durch das Aufbringen der Preßkräfte eine Quetschdichtung ausgebildet.

Die mit Hilfe des Kabeldurchführungselements erzielbare Abdichtung gewährleistet zumindest eine sanddichte Abdichtung, so daß ein unerwünschter Materialtransport von der Oberfläche des Mediumrohres in das beispielsweise mit der Bodenplatte vergossene Leerrohr vermieden wird. Je nach Ausführung der beteiligten Komponenten kann auch eine wasserdichte Abdichtung erreicht werden.

Gemäß einer vorteilhaften Ausführungsform der Erfindung umfaßt das Rohrverbindungssystem eine von der ersten Klemmvorrichtung verschiedene zweite Klemmvorrichtung, ausgebildet zum Aufbringen von vorzugsweise radial gerichteten Preßkräften auf einen zweiten Abschnitt des Rohrverbinders, zum Verbinden des Rohrverbinders mit dem Leerrohr.

Diese Ausführung ist insbesondere dann vorteilhaft anwendbar, wenn der Rohrverbinder als Reduziermuffe ausgeführt ist. Alternativ kann das Rohrverbindungssystem auch nur eine einzige, dem Rohrverbinder zugeordnete Klemmvorrichtung aufweisen, die dann beide Abschnitte des Rohrverbinders klemmt.

Bei den ersten und/oder zweiten Klemmvorrichtungen handelt es sich vorzugsweise um herkömmliche Klemmschellen, wie sie beispielsweise als Schlauch- oder Rohrschellen zum Einsatz kommen. Die benötigte Klemm- bzw. Preßkraft wird durch das Anziehen der Klemmschellen auf den Rohrverbinder aufgebracht. Es sind jedoch auch andere Arten von Klemmvorrichtungen verwendbar, vorzugsweise solche, die ebenfalls radial gerichtete Preßkräfte erzeugen können.

Gemäß einer vorteilhaften Ausführungsform der Erfindung sind die Kabeldurchführungsöffnungen des Kabeldurchführungselements mit wahlweise entfernbaren Verschlüssen verschließbar. Auf diese Weise kann auch dann eine Abdichtung gewährleistet werden, wenn das Kabeldurchführungselement mehrere Kabeldurchführungsöffnungen aufweist, von denen nicht alle für die Durchführung von Kabeln genutzt werden. Die Verschlüsse sind dabei vorzugsweise nach Art von Stopfen ausgeführt, die aus den Kabeldurchführungsöffnungen herausgedrückt werden können.

Gemäß einer vorteilhaften Ausführungsform der Erfindung weist das Kabeldurchführungselement die Form eines flachen Pyramidenstumpfes auf mit vorzugsweise parallel zueinander liegenden, rechteckigen Grund- und Deckflächen gleicher Breite, wobei die längere Grundfläche des Pyramidenstumpfes die erste Anlagefläche des Kabeldurchführungselements und die kürzere Deckfläche des Pyramidenstumpfes die zweite Anlagefläche des Kabeldurchführungselements bildet. Mit Hilfe einer derartigen geometrischen Ausgestaltung des Kabeldurchführungselements ist eine besonders gute Abdichtungsfunktion gewährleistet, ohne daß die Verwendung des Kabeldurchführungselements als zusätzliches Bauteil innerhalb der Verbindung zwischen Mediumrohr und Leerrohr einen nachteiligen Einfluß auf die mechanische Verbindung zwischen diesen beiden Rohren hat.

Gemäß einer vorteilhaften Ausführungsform der Erfindung ist der Rohrverbinder, zumindest in seinen von den Klemmvorrichtungen beaufschlagbaren Abschnitten, derart ausgeführt, daß mit Hilfe der Klemmvorrichtungen die benötigten Preßkräfte über den Rohrverbinder auf das Kabeldurchführungselement übertragen werden können. Mit anderen Worten ist der Rohrverbinder in diesen Bereichen derart verformbar, daß die von den Klemmvorrichtungen auf die Außenseite des Rohrverbinders aufgebrachten Klemmkräfte in ausreichendem Maße auf das zwischen Rohrverbinder und Mediumrohr liegende Kabeldurchführungselement übertragen werden können.

Der Rohrverbinder kann einen gleichbleibenden Innendurchmesser aufweisen. Er kann jedoch auch nach Art einer Reduziermuffe dazu dienen, ein Mediumrohr, das einen geringeren Außendurchmesser aufweist als der Innendurchmesser des Leerrohres, mit einem solchen Leerrohr dicht zu verbinden.

Die Erfindung ist nicht nur im Zusammenhang mit der Anbindung eines Gehäuses an ein Nah- oder Fernwärmenetz nutzbar. Das erfindungsgemäße Rohrverbindungssystem bzw. das erfindungsgemäße Kabeldurchführungselement kann bei jeder herzustellenden Verbindung zwischen einem Mediumrohr einer Nah- oder Fernwärmeleitung und einem Leerrohr verwendet werden.

Unter einem Kabel wird ein elektrisches Kabel im Sinne einer elektrischen Leitung verstanden, beispielsweise ein elektrisches Anschlußkabel oder ein Datenkabel. Ein Kabel im Sinne der Erfindung kann jedoch eine beliebige, d.h. auch nichtelektrische, mit dem Mediumrohr zu verlegende Versorgungsleitung vergleichsweise geringen Querschnitts sein, d.h. daß der Querschnitt der zur Durchführung vorgesehenen Versorgungsleitung deutlich geringer ist als der Querschnitt des Mediumrohres.

Ein Ausführungsbeispiel der Erfindung wird nachfolgend anhand der Zeichnungen näher erläutert. Hierbei zeigen:
- Fig. 1: eine erste Ansicht eines Rohrverbindungssystems,
- Fig. 2: eine zweite Ansicht des Rohrverbindungssystems aus Fig. 1,

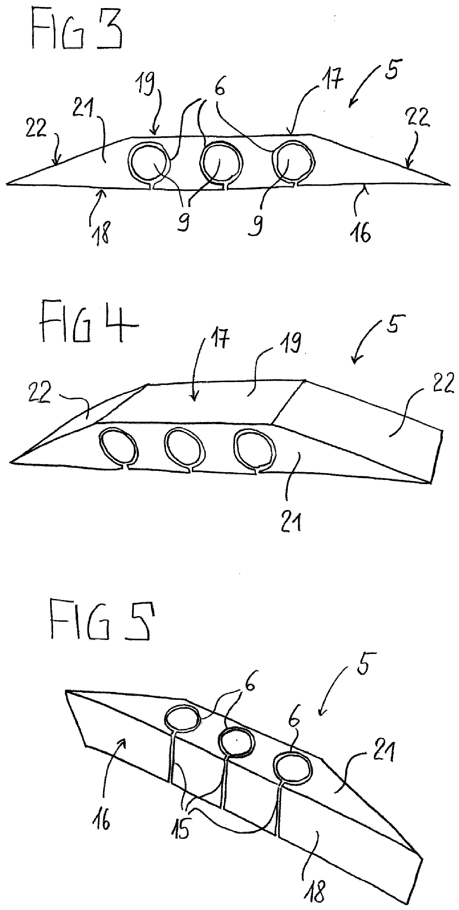

- Fig. 3-5: verschiedene Ansichten eines Kabeldurchführungselements.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Das nachfolgend beispielhaft beschriebene Rohrverbindungssystem 1 umfaßt eine Rohrverbinder 2 zum Verbinden eines Mediumrohres 3 einer Nah- oder Fernwärmeleitung mit einem Leerrohr 4, in das ein Abschnitt des Mediumrohres 3 eingeführt ist, wobei der Rohrverbinder 2 nach Art einer Manschette einerseits außen an das Mediumrohr 3 und andererseits außen an das Leerrohr 4 angelegt ist. Das Rohrverbindungssystem 1 umfaßt weiterhin ein wahlweise mit dem Rohrverbinder 2 verwendbares Kabeldurchführungselement 5, das eine Anzahl Kabeldurchführungsöffnungen 6 aufweist. Das Kabeldurchführungselement 5 ist zwischen dem Rohrverbinder 2 und dem Mediumrohr 3, die Rohrverbindung abdichtend, plaziert derart, daß es gleichzeitig an der Außenwand 7 des Mediumrohres 3 und an der Innenwand 8 des Rohrverbinders 2 anliegt.

Das Mediumrohr 3 kann beispielsweise einen Außendurchmesser von 111 mm oder 126 mm haben. Bei dem Leerrohr 4 kann es sich um das gerade Ende eines Rohres oder aber auch das gebogene Ende eines Rohrbogens handeln. Das Leerrohr 4 kann beispielsweise einen Durchmesser von 200 mm haben. Der Rohrverbinder 2 ist daher nach Art einer Reduziermuffe ausgeführt. In dem illustrierten Beispiel liegen die Längsachsen des Mediumrohres 3 und des Leerrohres 4 leicht schräg zueinander. Dies ist möglich, da es sich bei dem verwendeten Mediumrohr 3 um ein flexibles, insbesondere biegbar ausgeführtes Mediumrohr 3 handelt. Vorzugsweise handelt es sich bei dem Mediumrohr 3 um ein flexibles Verbundrohr (PMR), wobei das innere, medienführende Medienrohr aus Kunststoff und das äußere Mantelrohr aus Polyethylen besteht.

Das Rohrverbindungssystem 1 umfaßt eine erste Klemmvorrichtung 11 in Form einer Klemmschelle zum Aufbringen von radial gerichteten Preßkräften auf einen ersten Endabschnitt 13 des Rohrverbinders 2, wobei der erste Endabschnitt 13 an dem einen Ende des Rohrverbinders 2 angeordnet ist. Diese erste Klemmvorrichtung 11 dient zum Verbinden des Rohrverbinders 2 mit dem Mediumrohr 3.

Das Kabeldurchführungselement 5 ist in diesem ersten Endabschnitt 13 zwischen dem Rohrverbinder 2 und dem Mediumrohr 3 plaziert, wodurch es bei einem Aufbringen der Preßkräfte unter Ausbildung einer Quetschdichtung gleichzeitig gegen die Außenwand 7 des Mediumrohres 3 und die Innenwand 8 des Rohrverbinders 2 gepreßt wird.

Das Rohrverbindungssystem 1 umfaßt eine von der ersten Klemmvorrichtung 11 verschiedene zweite Klemmvorrichtung 12, ebenfalls in Form einer Klemmschelle, die zum Aufbringen von radial gerichteten Preßkräften auf einen zweiten Endabschnitt 14 des Rohrverbinders 2 ausgebildet ist, wobei der zweite Endabschnitt 14 an dem gegenüberliegenden anderen Ende des Rohrverbinders 2 angeordnet ist. Diese zweite Klemmvorrichtung 12 dient zum Verbinden des Rohrverbinders 2 mit dem Leerrohr 4.

Das verwendete Mediumrohr 3 ist für hohe mechanische Belastungen ausgelegt, so daß eine nur abschnittsweise Klemmung, wie nachfolgend beschrieben, keine negativen Auswirkungen auf die Funktionstüchtigkeit des Mediumrohres 3 hat.

Das Kabeldurchführungselement 5 besteht aus einem komprimierbaren, vorzugsweise elastischen Material. Bei dem Material des Kabeldurchführungselements 5 handelt es sich vorzugsweise um ein Gummi- oder Kautschukmaterial, wie einem Ethylen-Propylen-Dien-Kautschuk (EPDM). Besonders vorteilhaft ist es, wenn die Shore-Härte zwischen 45 und 55 liegt. Vorzugsweise ist das Kabeldurchführungselement 5 als Formteil ausgeführt. Das für das Kabeldurchführungselement verwendete Material ist so gewählt, daß es eine ausreichende Verformbarkeit bzw. Kompressibilität gewährleistet.

Das Kabeldurchführungselement 5 weist eine erste Anlagefläche 16 auf, die zur Anlage an dem Mediumrohr 3 ausgebildet ist. Außerdem weist es eine zweite Anlagefläche 17 auf, die zur Anlage an dem Rohrverbinder 2 ausgebildet ist.

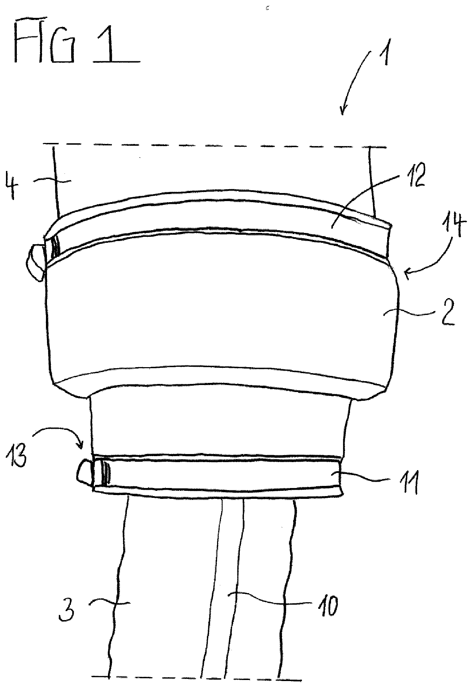

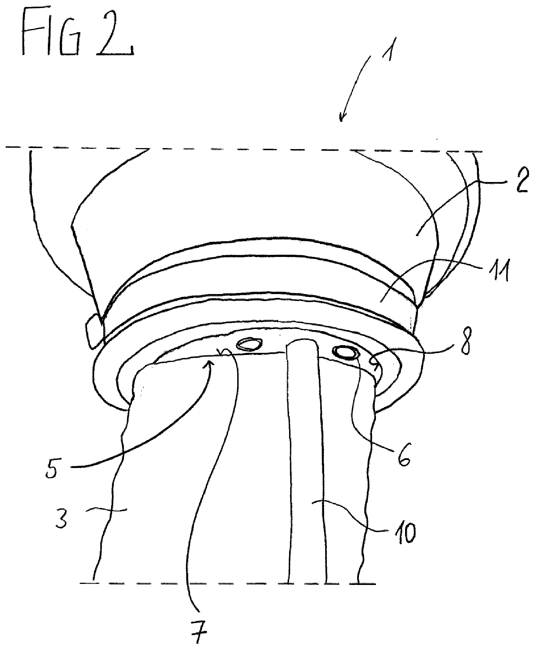

Die Anzahl der Kabeldurchführungsöffnungen 6 in dem Kabeldurchführungselement 5 kann in Abhängigkeit von der Länge des Kabeldurchführungselements 5 variieren. Im Beispiel weist das Kabeldurchführungselement 5 drei Kabeldurchführungsöffnungen 6 auf. Die Kabeldurchführungsöffnungen 6 sind entlang der Anlageflächen 16, 17 nebeneinander angeordnet. Die Kabeldurchführungsöffnungen 6 sind mit Verschlüssen 9 in Form von Stopfen verschlossen, die wahlweise entfernt werden können. Aufgrund der Elastizität des Materials des Kabeldurchführungselements 5 können die Kabeldurchführungsöffnungen 6 Kabel 10 mit unterschiedlichen Außendurchmessern, dabei zugleich die Kabeldurchführung im Bereich der Kabeldurchführungsöffnung 6 abdichtend, aufnehmen. So können beispielsweise in Kabeldurchführungsöffnungen 6 mit einem Innendurchmesser von 11 mm Kabel 10 mit einem Außendurchmesser von 10 bis 14 mm aufgenommen werden, ohne hierdurch die Abdichtung des Rohrverbinders 2 beeinträchtigt wird. In den Fig. 1 und 2 ist wird ein einzelnes Kabel 10 durch die Kabeldurchführung hindurchgeführt, indem es durch die mittlere Kabeldurchführungsöffnung 6 hindurchreicht.

Das Kabeldurchführungselement 5 weist die Form eines flachen Pyramidenstumpfes auf mit parallel zueinander liegenden, rechteckigen Grund- und Deckflächen 18, 19 gleicher Breite. Dabei bildet die längere Grundfläche 18 des Pyramidenstumpfes die erste Anlagefläche 16 des Kabeldurchführungselements 5 und die kürzere Deckfläche 19 des Pyramidenstumpfes bildet einen Teil der zweiten Anlagefläche 17 des Kabeldurchführungselements 5.

Die Mantelfläche des Pyramidenstumpfes setzt sich aufgrund der gleich breiten Grund- und Deckflächen 18, 19 zusammen aus zwei parallel zueinander liegenden, trapezförmigen, die Längskanten der Grund- und Deckfläche 18, 19 miteinander verbindenden ersten Seitenflächen 21, durch die hindurch die Kabeldurchführungsöffnungen 6 verlaufen, sowie aus zwei rechteckigen, schräg zueinander liegenden, die Querkanten der Grund- und Deckfläche 18, 19 miteinander verbindenden zweiten Seitenflächen 22, welche die seitlichen Flanken des Kabeldurchführungselements 5 bilden. Zusammen mit der Deckfläche 19 bilden die Seitenflächen 22 die zweite Anlagefläche 17. Im montierten Zustand liegt dann die Grundfläche 18 des Kabeldurchführungselements 5 vollflächig an der Außenwand 7 des Mediumrohres 3 an, während die Deckfläche 19 und die zweiten Seitenflächen 22 des Kabeldurchführungselements 5 vollflächig an der Innenwand 8 des Leerrohres 4 anliegen. Dabei ist unter Verformung des Kalbedurchführungselements 5 eine Quetschdichtung hergestellt, mit der die gewünschte, eine Kabeldurchführung aufweisende, dichte Rohrverbindung realisiert wird, wobei die Verformung des Kabeldurchführungselements 5 sowohl eine beidseitige, nämlich senkrecht zu der Grund- und Deckfläche 18, 19 verlaufende Kompression als auch eine Biegung entlang der Längsachse des Kabeldurchführungselements 5 umfaßt.

Das hier beispielhaft beschriebene Kabeldurchführungselement 5 weist folgende Abmessungen auf: Länge der Grundfläche 18 = 130 mm; Länge der Deckfläche 19 = 50 mm; Breite des Kabeldurchführungselements 5 = 30 mm; Höhe des Kabeldurchführungselements 5 = 15 mm.

Zum einfachen Plazieren der Kabel 10 in dem Kabeldurchführungselement 5 sind die Kabeldurchführungsöffnungen 6 geschlitzt ausgeführt. Die im Querschnitt kreisrunden Kabeldurchführungsöffnungen 6 sind über in Axialrichtung verlaufende Schlitze 15 mit der ersten Anlagefläche 16 des Kabeldurchführungselements 5 verbunden, so daß das Kabeldurchführungselement 5 an diesen Stellen beschädigungslos so weit aufgebogen werden kann, daß sich jeweils ein einzulegendes Kabel 10 durch einen aufgeweiteten Schlitz 15 in eine Kabeldurchführungsöffnung 6 einlegen läßt.

Die Montage des als Dichtmanschette ausgeführten, erfindungsgemäßen Rohrverbinders 2 mit zusätzlichem Kabeldurchführungselement 5 ist besonders einfach. Leerrohr 4 und Rohrverbinder 2 sind bereits lose vormontiert. Das Mediumrohr 3 mit der Anzahl der daran entlang laufenden Kabel 10 wird durch den Rohrverbinder 2 in das Leerrohr 4 durchgeschoben und die zweite Klemmvorrichtung 12 am Leerrohr 4 wird betätigt. Damit ist alles für den letzten Montageschritt, die Herstellung der Abdichtung, vorbereitet. Die entsprechende, mit dem Mediumrohr 3 zu verlegende Anzahl von Kabeln 10 werden, nachdem die Verschlüsse 9 aus den Kabeldurchführungsöffnungen 6 des Kabeldurchführungselements 5 entfernt wurden, in die Kabeldurchführungsöffnungen 6 des noch nicht montierten Kabeldurchführungselements 5 eingelegt. Zu diesem Zweck werden die Schlitze 15 aufgeklappt bzw. aufgebogen. Anschließend wird das Kabeldurchführungselement 5 unter den Rohrverbinder 2 geschoben, nämlich zwischen Mediumrohr 3 und Rohrverbinder 2, und dort mit Hilfe der ersten Klemmvorrichtung 11 fixiert. Dabei wird das Kabeldurchführungselement 5 zwischen den beiden Bauteilen 2, 3 angeordnet, indem es entlang der in Axialrichtung, parallel zu dem Mediumrohr 3 verlaufenden Kabel 10 verschoben wird, die in den Kabeldurchführungsöffnungen 6 einliegen, welche durch die parallel zueinander liegenden ersten Seitenflächen 21 des Kabeldurchführungselements 5 hindurch verlaufen. Anders ausgedrückt wird das Kabeldurchführungselement 5 derart plaziert, daß seine Längsrichtung quer zu der axialen Richtung des Mediumrohres 3 angeordnet ist. Die Kabel 10 verlaufen dann parallel mit dem Mediumrohr 3 in axialer Richtung.

Erfolgt das Einlegen der Kabel 10 in die Kabeldurchführungsöffnungen 6 bei noch nicht montiertem Kabeldurchführungselement 5, wird die Montage der Abdichtung wesentlich erleichtert. Es entfällt ein "Einfädeln" der Kabel in ein bereits montiertes Kabeldurchführungselement. Selbstverständlich ist es aber auch möglich, die Kabel 10 nachträglich in ein bereits zwischen Mediumrohr 3 und Rohrverbinder 2 plaziertes Kabeldurchführungselement 5 einzuführen; in diesem Fall werden keine Schlitze 15 benötigt.

Alle in der Beschreibung, den nachfolgenden Ansprüchen und der Zeichnung dargestellten Merkmale können sowohl einzeln als auch in beliebiger Kombination miteinander erfindungswesentlich sein. Diese Merkmale bzw. Merkmalskombinationen können jeweils eine selbständige Erfindung begründen, deren Inanspruchnahme ausdrücklich vorbehalten ist.

Bei der Angabe einer eine Erfindung definierenden Merkmalskombination müssen einzelne Merkmale aus der Beschreibung eines Ausführungsbeispiels nicht zwingend mit einem oder mehreren oder allen anderen in der Beschreibung dieses Ausführungsbeispiels angegebenen Merkmalen kombiniert werden; diesbezüglich ist jede Unterkombination von Merkmalen eines oder mehrerer Ausführungsbeispiele ausdrücklich mitoffenbart.

Außerdem können gegenständliche Merkmale der Vorrichtung umformuliert als Verfahrensmerkmale Verwendung finden und Verfahrensmerkmale können umformuliert als gegenständliche Merkmale der Vorrichtung Verwendung finden. Auf diese Weise umformulierte Merkmale sind implizit mitoffenbart.

### Bezugszeichenliste

- 1: Rohrverbindungssystem
- 2: Rohrverbinder
- 3: Mediumrohr
- 4: Leerrohr
- 5: Kabeldurchführungselement
- 6: Kabeldurchführungsöffnung
- 7: Außenwand des Mediumrohres
- 8: Innenwand des Rohrverbinders
- 9: Verschlußstopfen
- 10: Kabel
- 11: erste Klemmvorrichtung
- 12: zweite Klemmvorrichtung
- 13: erster Endabschnitt
- 14: zweiter Endabschnitt
- 15: Schlitz
- 16: erste Anlagefläche
- 17: zweite Anlagefläche
- 18: Grundfläche
- 19: Deckfläche
- 20: (frei)
- 21: erste Seitenfläche
- 22: zweite Seitenfläche

## Patentansprüche

1. Rohrverbindungssystem (1), mit einem Rohrverbinder (2) zum Verbinden eines Mediumrohres (3) einer Nah- oder Fernwärmeleitung mit einem Leerrohr (4), in das ein Abschnitt des Mediumrohres (3) eingeführt ist, wobei der Rohrverbinder (2) nach Art einer Manschette einerseits an das Mediumrohr (3) und andererseits an das Leerrohr (4) anlegbar ist, **gekennzeichnet durch** ein Kabeldurchführungselement (5), das eine Anzahl Kabeldurchführungsöffnungen (6) aufweist, welches Kabeldurchführungselement (5) zwischen dem Rohrverbinder (2) und dem Mediumrohr (3), die Rohrverbindung abdichtend, plazierbar ist derart, daß es gleichzeitig an der Außenwand (7) des Mediumrohres (3) und an der Innenwand (8) des Rohrverbinders (2) anliegt.

2. Rohrverbindungssystem (1) nach Anspruch 1, mit einer Anzahl Klemmvorrichtungen (11, 12), wobei wenigstens eine erste Klemmvorrichtung (11) zum Aufbringen von vorzugsweise radial gerichteten Preßkräften auf einen ersten Abschnitt (13) des Rohrverbinders (2) ausgebildet ist, zum Verbinden des Rohrverbinders (2) mit dem Mediumrohr (3), wobei das Kabeldurchführungselement (5) in diesem ersten Abschnitt (13) zwischen dem Rohrverbinder (2) und dem Mediumrohr (3) plazierbar ist, wodurch es bei einem Aufbringen der Preßkräfte gleichzeitig gegen die Außenwand (7) des Mediumrohres (3) und die Innenwand (8) des Rohrverbinders (2) gepreßt wird.

3. Rohrverbindungssystem (1) nach Anspruch 2, mit einer von der ersten Klemmvorrichtung (11) verschiedenen zweiten Klemmvorrichtung (12), ausgebildet zum Aufbringen von Preßkräften auf einen zweiten Abschnitt (14) des Rohrverbinders (2), zum Verbinden des Rohrverbinders (2) mit dem Leerrohr (4) .

4. Rohrverbindungssystem (1) nach einem der Ansprüche 1 bis 3, wobei das Kabeldurchführungselement (5) aus einem komprimierbaren, vorzugsweise elastischen Material besteht und wobei das Kabeldurchführungselement (5) eine erste Anlagefläche (16), ausgebildet zur Anlage an dem Mediumrohr (3), eine zweite Anlagefläche (17), ausgebildet zur Anlage an dem Rohrverbinder (2), und eine Anzahl Kabeldurchführungsöffnungen (6) aufweist.

5. Rohrverbindungssystem (1) nach Anspruch 4, wobei die Kabeldurchführungsöffnungen (6) des Kabeldurchführungselements (5) mit wahlweise entfernbaren Verschlüssen (9) verschließbar sind.

6. Rohrverbindungssystem (1) nach Anspruch 4 oder 5, wobei das Kabeldurchführungselement (5) die Form eines flachen Pyramidenstumpfes aufweist mit vorzugsweise parallel zueinander liegenden, rechteckigen Grund- und Deckflächen (18, 19) gleicher Breite, wobei die längere Grundfläche (18) des Pyramidenstumpfes die erste Anlagefläche (16) des Kabeldurchführungselements (5) und die kürzere Deckfläche (19) des Pyramidenstumpfes die zweite Anlagefläche (17) des Kabeldurchführungselements (5) bildet.

7. Verwendung eines Kabeldurchführungselements (5) mit einem Rohrverbinder (2) in einem Rohrverbindungssystem (1) nach einem der Ansprüche 1 bis 6 derart, daß das Kabeldurchführungselement (5), eine Anzahl Kabel (10) aufnehmend, zwischen dem Rohrverbinder (2) und einem Mediumrohr (3) einer Nah- oder Fernwärmeleitung, die Rohrverbindung abdichtend, plazierbar ist derart, daß es gleichzeitig an einer Außenwand (7) des Mediumrohres (3) und an einer Innenwand (8) des Rohrverbinders (2) anliegt, wobei das Kabeldurchführungselement (5) aus einem komprimierbaren, vorzugsweise elastischen Material besteht und eine erste Anlagefläche (16) aufweist, die zur Anlage an dem Mediumrohr (3) ausgebildet ist, und die eine zweite Anlagefläche (17) aufweist, die zur Anlage an dem Rohrverbinder (2) ausgebildet ist, und das eine Anzahl Kabeldurchführungsöffnungen (6) umfaßt.

8. Verfahren zum Abdichten einer Rohrverbindung mit Hilfe eines Rohrverbindungssystems (1), das einen Rohrverbinder (2) und ein Kabeldurchführungselement (5) umfaßt, mit den Schritten:
Verbinden eines Mediumrohres (3) einer Nah- oder Fernwärmeleitung mit einem Leerrohr (4), in das ein Abschnitt des Mediumrohres (3) eingeführt ist, wobei der Rohrverbinder (2) nach Art einer Manschette einerseits an das Mediumrohr (3) und andererseits an das Leerrohr (4) angelegt wird, **gekennzeichnet durch** Plazieren des Kabeldurchführungselements (5), das eine Anzahl Kabeldurchführungsöffnungen (6) aufweist, zwischen dem Rohrverbinder (2) und dem Mediumrohr (3), die Rohrverbindung abdichtend, derart, daß es gleichzeitig an der Außenwand (7) des Mediumrohres (3) und an der Innenwand (8) des Rohrverbinders (2) anliegt,
wobei vor dem Plazieren des Kabeldurchführungselements (5) zwischen dem Rohrverbinder (2) und dem Mediumrohr (3) in wenigstens eine der Kabeldurchführungsöffnungen (6) des Kabeldurchführungselements (5) ein Kabel (10) eingelegt wird.

9. Verfahren nach Anspruch 8, wobei das Kabel (10) durch einen Schlitz (15) in dem Kabeldurchführungselement (5) in die Kabeldurchführungsöffnung (6) eingelegt wird.

## Claims

1. Pipe connection system (1), having a pipe connector (2) for connecting a media pipe (3) of a local or district heating line to an empty pipe (4) into which a portion of the media pipe (3) is introduced, wherein the pipe connector (2) is able to be brought to bear in the manner of a sleeve on the media pipe (3), on the one hand, and on the empty pipe (4), on the other hand, **characterized by** a cable feedthrough element (5) which has a number of cable feedthrough openings (6), said cable feedthrough element (5) being able to be placed between the pipe connector (2) and the media pipe (3) so as to seal the pipe connection in such a manner that said cable feedthrough element (5) bears simultaneously on the external wall (7) of the media pipe (3) and on the internal wall (8) of the pipe connector (2).

2. Pipe connection system (1) according to Claim 1, having a number of clamping devices (11, 12), wherein at least one first clamping device (11) is configured to apply preferably radially oriented compressive forces to a first portion (13) of the pipe connector (2), so as to connect the pipe connector (2) to the media pipe (3), wherein the cable feedthrough element (5) is able to be placed in this first portion (13) between the pipe connector (2) and the media pipe (3), as a result of which said cable feedthrough element (5) is pressed simultaneously against the external wall (7) of the media pipe (3) and the internal wall (8) of the pipe connector (2) when the compressive forces are applied.

3. Pipe connection system (1) according to Claim 2, having a second clamping device (12) which differs from the first clamping device (11) and is configured to apply compressive forces to a second portion (14) of the pipe connector (2), so as to connect the pipe connector (2) to the empty pipe (4) .

4. Pipe connection system (1) according to one of Claims 1 to 3, wherein the cable feedthrough element (5) is composed of a compressible, preferably elastic, material and wherein the cable feedthrough element (5) has a first contact face (16) which is configured to bear on the media pipe (3), a second contact face (17) which is configured to bear on the pipe connector (2), and a number of cable feedthrough openings (6).

5. Pipe connection system (1) according to Claim 4, wherein the cable feedthrough openings (6) of the cable feedthrough element (5) are able to be closed by selectively removable closures (9).

6. Pipe connection system (1) according to Claim 4 or 5, wherein the cable feedthrough element (5) has the shape of a flat truncated pyramid with preferably mutually parallel, rectangular base areas and cover areas (18, 19) of identical width, wherein the longer base area (18) of the truncated pyramid forms the first contact face (16) of the cable feedthrough element (5) and the shorter cover area (19) of the truncated pyramid forms the second contact face (17) of the cable feedthrough element (5).

7. Use of a cable feedthrough element (5) having a pipe connector (2) in a pipe connection system (1) according to one of Claims 1 to 6 in such a manner that the cable feedthrough element (5), while receiving a number of cables (10), is able to be placed between the pipe connector (2) and a media pipe (3) of a local or district heating line so as to seal the pipe connection in such a manner that said cable feedthrough element (5) bears simultaneously on an external wall (7) of the media pipe (3) and on an internal wall (8) of the pipe connector (2), wherein the cable feedthrough element (5) is composed of a compressible, preferably elastic, material and has a first contact face (16) which is configured to bear on the media pipe (3), and has a second contact face (17) which is configured to bear on the pipe connector (2), and comprises a number of cable feedthrough openings (6).

8. Method for sealing a pipe connection with the aid of a pipe connection system (1) which comprises a pipe connector (2) and a cable feedthrough element (5), comprising the following method steps:
connecting a media pipe (3) of a local or district heating line to an empty pipe (4) into which a portion of the media pipe (3) is introduced, wherein the pipe connector (2) is brought to bear in the manner of a sleeve on the media pipe (3), on the one hand, and on the empty pipe (4), on the other hand,
**characterized by**
placing the cable feedthrough element (5), which has a number of cable feedthrough openings (6), between the pipe connector (2) and the media pipe (3) so as to seal the pipe connection in such a manner that said cable feedthrough element (5) bears simultaneously on the external wall (7) of the media pipe (3) and on the internal wall (8) of the pipe connector (2),
wherein, prior to placing the cable feedthrough element (5) between the pipe connector (2) and the media pipe (5), a cable (10) is inserted into at least one of the cable feedthrough openings (6) of the cable feedthrough element (5).

9. Method according to Claim 8, wherein the cable (10) is inserted into the cable feedthrough opening (6) through a slot (15) in the cable feedthrough element (5).

## Revendications

1. Système de raccordement de tuyaux (1), avec un raccord de tuyaux (2) pour raccorder un tuyau de milieu (3) d'une conduite de chauffage local ou à distance à un tuyau vide (4) dans lequel est introduite une section du tuyau de milieu (3), le raccord de tuyaux (2) pouvant être appliqué à la manière d'un manchon d'une part sur le tuyau de milieu (3) et d'autre part sur le tuyau vide (4),
**caractérisé par** un élément de passage de câble (5), qui présente un nombre d'ouvertures de passage de câble (6), lequel élément de passage de câble (5) pouvant être placé entre le raccord de tuyaux (2) et le tuyau de milieu (3), en étanchéifiant le raccordement de tuyaux, de telle sorte qu'il s'appuie simultanément contre la paroi extérieure (7) du tuyau de milieu (3) et contre la paroi intérieure (8) du raccord de tuyaux (2) .

2. Système de raccordement de tuyaux (1) selon la revendication 1, avec un nombre de dispositifs de serrage (11, 12), dans lequel au moins un premier dispositif de serrage (11) est configuré pour appliquer des forces de pression dirigées de préférence radialement sur une première section (13) du raccord de tuyaux (2), pour raccorder le raccord de tuyaux (2) au tuyau de milieu (3), dans lequel l'élément de passage de câble (5) peut être placé dans cette première section (13) entre le raccord de tuyaux (2) et le tuyau de milieu (3), moyennant quoi il est pressé simultanément contre la paroi extérieure (7) du tuyau de milieu (3) et la paroi intérieure (8) du raccord de tuyaux (2) lors d'une application des forces de pression.

3. Système de raccordement de tuyaux (1) selon la revendication 2, avec un deuxième dispositif de serrage (12) différent du premier dispositif de serrage (11), configuré pour appliquer des forces de pression à une deuxième section (14) du raccord de tuyaux (2), pour raccorder le raccord de tuyaux (2) au tuyau vide (4).

4. Système de raccordement de tuyaux (1) selon l'une quelconque des revendications 1 à 3, dans lequel l'élément de passage de câble (5) est constitué d'un matériau compressible, de préférence élastique, et dans lequel l'élément de passage de câble (5) présente une première surface d'appui (16) configurée pour s'appuyer sur le tuyau de milieu (3), une deuxième surface d'appui (17) configurée pour s'appuyer sur le raccord de tuyaux (2), et un nombre d'ouvertures de passage de câble (6).

5. Système de raccordement de tuyaux (1) selon la revendication 4, dans lequel les ouvertures de passage de câble (6) de l'élément de passage de câble (5) peuvent être fermées par des fermetures (9) amovibles au choix.

6. Système de raccordement de tuyaux (1) selon la revendication 4 ou 5, dans lequel l'élément de passage de câble (5) présente la forme d'une pyramide tronquée plate avec des surfaces de base et de recouvrement (18, 19) rectangulaires, de préférence parallèles entre elles, de même largeur, la surface de base (18) plus longue de la pyramide tronquée formant la première surface d'appui (16) de l'élément de passage de câble (5) et la surface de recouvrement (19) plus courte de la pyramide tronquée formant la deuxième surface d'appui (17) de l'élément de passage de câble (5).

7. Utilisation d'un élément de passage de câble (5) avec un raccord de tuyaux (2) dans un système de raccordement de tuyaux (1) selon l'une quelconque des revendications 1 à 6, de telle sorte que l'élément de passage de câble (5), recevant un nombre de câble (10), peut être placé entre le raccord de tuyaux (2) et un tuyau de milieu (3) d'une conduite de chauffage local ou à distance, en étanchéifiant le raccordement de tuyaux, de telle sorte qu'il s'appuie simultanément contre une paroi extérieure (7) du tuyau de milieu (3) et contre une paroi intérieure (8) du raccord de tuyaux (2), l'élément de passage de câble (5) étant constitué d'un matériau compressible, de préférence élastique, et présentant une première surface d'appui (16) qui est configurée pour s'appuyer sur le tuyau de milieu (3) et présentant une deuxième surface d'appui (17) qui est configurée pour s'appuyer sur le raccord de tuyaux (2), et qui comprend un nombre d'ouvertures de passage de câble (6).

8. Procédé d'étanchéification d'un raccordement de tuyaux à l'aide d'un système de raccordement de tuyaux (1) qui comprend un raccord de tuyaux (2) et un élément de passage de câble (5), avec les étapes suivantes :
le raccordement d'un tuyau de milieu (3) d'une conduite de chauffage local ou à distance à un tuyau vide (4) dans lequel est introduit une section du tuyau de milieu (3), le raccord de tuyaux (2) étant appliqué à la manière d'un manchon d'une part sur le tuyau de milieu (3) et d'autre part sur le tuyau vide (4),
**caractérisé par**
la mise en place de l'élément de passage de câble (5), qui présente un nombre d'ouvertures de passage de câble (6), entre le raccord de tuyaux (2) et le tuyau de milieu (3), en étanchéifiant le raccordement de tuyaux, de telle sorte qu'il s'appuie simultanément contre la paroi extérieure (7) du tuyau de milieu (3) et contre la paroi intérieure (8) du raccord de tuyaux (2),
dans lequel, avant la mise en place l'élément de passage de câble (5) entre le raccord de tuyaux (2) et le tuyau de milieu (3), un câble (10) est inséré dans au moins une des ouvertures de passage de câble (6) de l'élément de passage de câble (5).

9. Procédé selon la revendication 8, dans lequel le câble (10) est inséré dans l'ouverture de passage de câble (6) à travers une fente (15) dans l'élément de passage de câble (5).
